Europäisches Patentamt

European Patent Office

Office européen des brevets

(11) Publication number: **0 191 273**
A1

# (12) EUROPEAN PATENT APPLICATION

(21) Application number: 85830092.4

(22) Date of filing: 15.04.85

(51) Int. Cl.⁴: **F 16 B 5/06**

(30) Priority: 11.02.85 IT 2076285 U

(43) Date of publication of application: 20.08.86
Bulletin 86/34

(84) Designated Contracting States: **AT BE CH DE FR GB LI
LU NL SE**

(71) Applicant: **MONDIAL-LUX di Garavaglia Elvise, Via V.
Veneto, 21, Bernate Ticino (IT)**

(72) Inventor: **Garavaglia, Elvise, Via V. Veneto, 21, Bernate
Ticino (IT)**

(74) Representative: **Caregaro, Silvio et al, c/o Società
Italiana Brevetti S.p.A. Via Carducci 8, I-20123 Milano (IT)**

(54) Spacer clamp apt to join two glass plates, used particularly on chandeliers.

(57) Spacer clamp apt to join two glass plates together
keeping the same spaced from each other. The clamp is
especially suited for use on chandeliers or the like. The
spacer clamp is formed by a substantially elastic lamina
consisting of two C-shaped parts 1, 2 with the concavity
pointing in opposite directions and connected to each other
by a portion 5. The C-shaped parts 1, 2 are forced lightly
onto the edges of the glass plates.

EP 0 191 273 A1

"SPACER CLAMP APT TO JOIN TWO GLASS PLATES, USED
PARTICULARLY ON CHANDELIERS"

This invention relates to a spacer clamp suitable to join two glass plates together and to keep these spaced from each other. The spacer clamp in question is especially suited for use on chandeliers or the like.

It is known that in the production and assembly of chandeliers and the like, consisting of glass plates, it is necessary to join the plates together and to keep these spaced from each other. The joining of these plates must be simple and practical and the chandeliers must be easy to disassemble and re-assemble for routine maintenance and cleaning.

The spacer clamp according to this invention has been conceived to meet all of the above requirements; it can easily be applied to chandeliers and is perfectly apt to permit easy disassembly and reassembling of same.

A further characteristic of the spacer clamp according to this invention lies in the fact that it permits joining of the glass plates regardless of whether these lie substantially on the same plane or are set at an angle of any value.

The characteristics and advantages afforded by the spacer clamp according to the invention will be evident from the following detailed description of a non-limiting embodiment thereof with reference to the annexed drawings in which:

FIGURE 1 is a perspective view of the spacer clamp according to the invention apt to join substantially co-planar glass plates to each other;

FIGURE 2 is a front view of the spacer clamp, as installed;

FIGURE 3 is a view of the spacer clamp taken on line III-III of Fig. 2;

FIGURE 4 is a perspective view of the spacer clamp according to the invention apt to join two non co-planar glass plates;

FIGURE 5 is a view of the spacer clamp of Fig. 4, as installed;

FIGURE 6 is a view of the spacer clamp taken on line VI-VI of Fig. 5.

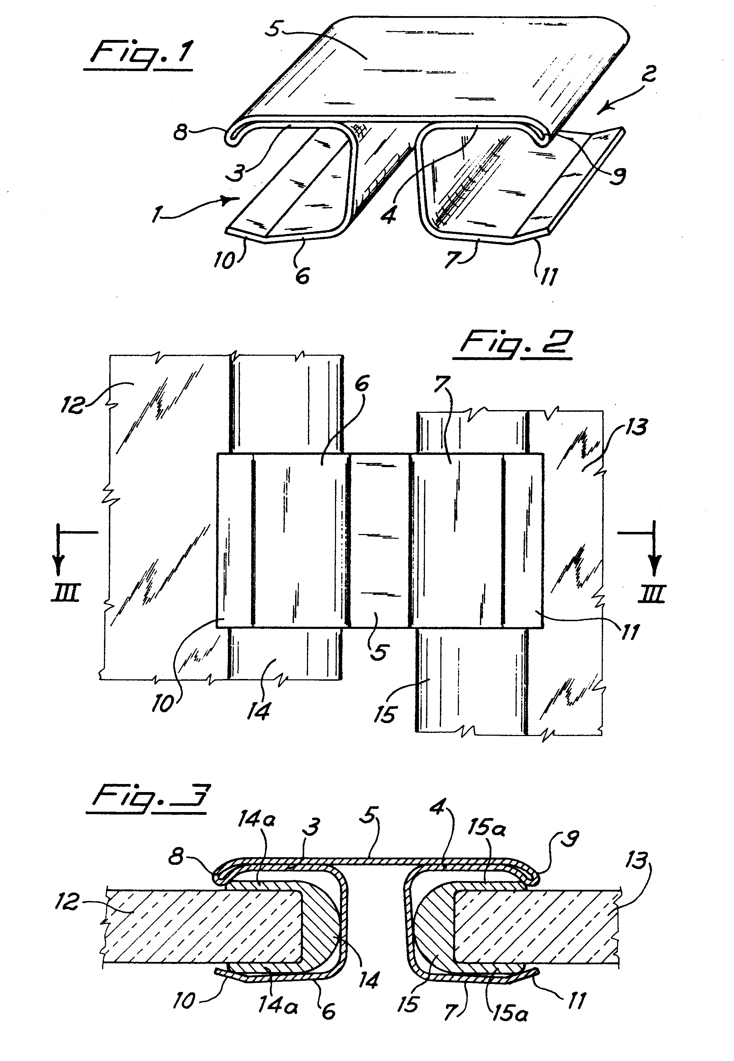

Having specific reference to Figs. 1 to 3, the spacer clamp according to the invention, referred to hereinafter simply as a "clamp" consists essentially of a preferably metal lamina (but which may also be made of plastic material); said lamina is folded over to form two substantially C shaped parts 1 and 2 with their concavities pointing in opposite directions. Moreover, two corresponding branches of said C shaped parts (top branches 3-4 of Fig. 1) extend and connect to each other through part 5 extending on a plane substantially parallel to that of said branches 3-4. Lower branches 6 and 7 of the C shaped parts are instead not connected to each other.

As shown in the detail in Figs. 1 and 3, the end edges of said parts C 1,2, identified as 8,9 in respect to branches 3,4 and as 10,11 with respect to branches 6,7 are folded over slightly toward the interior of said C shaped parts so as to exert a certain amount of pressure of said ends on the glass plates to be joined together by the clamps. It is however sufficient that one only of said pairs of end edges, for example, edges 8 and 9, be folded as shown.Edges 10 and 11 may be not folded and may lie on the same plane as branches 6,7 (this arrangement is not shown).

As illustrated specifically in Fig. 3 the part of portion 5 which overlaps on branches 3 and 4 of the clamp is in contact with said branches. In this way, the configuration of portion 5 (plane in this case) determines in the first place, the reciprocal position of C-shaped parts 1,2 of the clamp and contributes to maintain said parts in said position.

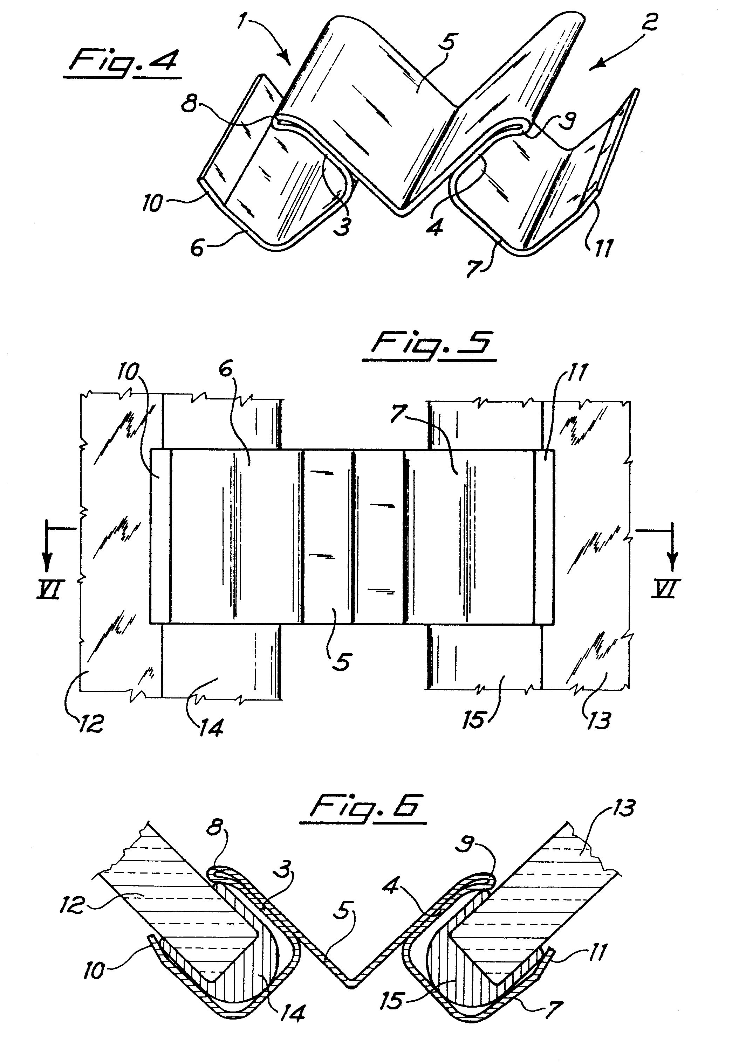

With reference to Figs. 4 to 6, also in this case the clamp according to the invention consists of two substantially C-shaped parts 1,2 the concavity of which is oriented in opposite directions. Two branches, corresponding to said C-shaped elements (top branches 3,4 of Fig. 4) extend and connect with each other by means of a portion 5 which is folded centrally along a mid line to form thereby substantially a letter V.

In this case also, the parts of portion 5, overlapped on branches 3,4 of C-shaped parts 1,2 are in contact with the branches themselves. In this manner, portion 5 determines and contributes to maintain the reciprocal position of the two C-shaped parts 1,2 which form, in this case an angle equivalent to the folding angle of portion 5.

With specific reference to Figs. 4 and 6, the end edges of C-shaped parts 1 and 2, identified as 8,9 for top branches 3 and 4 and as 10,11 for lower branches 6 and 7 are slightly bent toward the interior of said C-shaped parts so as to exert a slight pressure on the glass plates to be joined by the clamp. Also in this case it is sufficient to fold only one pair of end edges, for example, edges 8 and 9 as shown. Edges 10,11 may be not folded and lie on the same plane as branches 6 and 7 (this arrangement is not shown).

In Figs. 3 and 6 in particular, (but also in Figs. 2 and 5) it can be seen how the clamp according to the invention is applied to glass plates and how said plates are joined by the clamp.

The edges of the glass plates designated by numbers 12 and 13 are provided with linings 14 and 15 respectively, made, for example, of plastic material which is substantially secured to said plates and extends over the entire contour of same.

The clamp according to the invention as shown in Figs. 2 and 5 and Figs. 3 and 6, is applied on said linings 14 and 15 but it is evident that the lining may not be applied, in which case the clamp would be applied directly to the bare edges of the glass plates.

As it can be seen in more detail in Figs. 3 and 6 the two C-shaped parts forming the clamp according to the invention are forced lightly onto the edges of the glass plates, in particular on their linings 14 and 15.

For this purpose, the distance between the branches of said C-shaped parts will be slightly less with respect to the overall thickness of glass plates 12,13 and their respective linings 14,15 so that when said plates are introduced in the C-shaped parts, the branches of these will devaricate to a slight extent and set themselves in the position shown in Figs. 3 and 6, in which it is seen that said branches, in particular their edges 8,9 and 10,11, exert a pressure on the linings of the glass plates. Furthermore, the length of branches 3,4 and 6,7 is greater than the length of sides 14a and 15a of linings 14,15 so that said C-shaped parts 1,2 completely embrace said linings 14,15.

Once the clamp is applied to the glass plates, the latter will be spaced from each other by a distance equal to the distance between C-shaped parts 1,2 as the latter are not near to each other but located at a certain distance from each other, regardless of whether portion 5 is rectilinear or V shaped.

The material (preferably metal) but also plastic for the clamp according to this invention must have a certain elasticity to permit a limited degree of deformation of portion 5, thereby to provide a clamp having a substantially elastic body.

It is evident that in case portion 5 is substantially V-shaped the value of the angle of said V is not to be considered binding.

It is understood, lastly, that variants and/or modifications may be introduced in the spacer clamp according to this invention, without exceeding from the protective scope of the invention.

C L A I M S

1. Spacer clamp apt to join glass plates, characteri:
zed in that it is formed by a lamina consisting of two
C-shaped parts 1,2 the concativity of which points in
opposite directions, two corresponding branches 3,4 of
said C-shaped parts extending and being connected to
each other by a portion 5 which is partially overlapped
and substantially in contact with branches 3,4 of said
C-shaped parts 1,2.

2. Spacer clamp according to claim 1, characterized
in that said C-shaped parts 1,2 are spaced from each
other.

3. Spacer clamp according to claim 1, characterized
in that portion 5 is substantially plane.

4. Spacer clamp according to claim 1, characterized
in that said portion 5 is substantially V shaped.

5. Spacer clamp according to claim 1, characterized
in that the side which connects branches 3, 6 and 4, 7
of said C-shaped parts 1,2 is essentially perpendicular
to portion 5 of the clamp.

6. Spacer clamp according to claim 1, characterized
in that the end edges 8,9 and 10,11 of said C-shaped parts
1,2 are slightly folded toward the interior of said
C-shaped parts.

7. Spacer clamp according to claim 1, characterized
in that the end edges 10,11 of branches 6,7 lie on the
same plane of the latter.

8. Spacer clamp according to claim 1, characterized
in that the distance between branches 3, 4 and 6, 7 of
said C-shaped parts 1,2 is slightly less than the overall thickness of glass plates 12,13.

9. Spacer clamp according to claim 8, characterized in thax glass plates 12,13 are provided with perimetral lining 14,15, the length of branches 3, 4 and 6, 7 of the clamp being greater than the length of sides 14a, 15a of said linings, so that C-shaped parts 1,2 completely embrace said linings 14,15.

10. Spacer clamp to join glass plates apt to maintain these spaced from each other, substantially as described and illustrated in the annexed drawings.

_Fig.1_

_Fig.2_

_Fig.3_

_Fig.4_

_Fig.5_

_Fig.6_

## DOCUMENTS CONSIDERED TO BE RELEVANT

EP 85830092.4

| Category | Citation of document with indication, where appropriate, of relevant passages | Relevant to claim | CLASSIFICATION OF THE APPLICATION (Int. Cl.4) |
|---|---|---|---|
| A | DE - B - 1 400 755 (ALUMINIUM COMPANY OF AMERICA) <br> * Claim 1; fig. 2,3,7 * <br> -- | 1-3 | F 16 B 5/06 |
| A | CH - A5 - 578 127 (INNENARCHI-TEKTEN - TEAM WALTER MÜLLER AG) <br> * Fig. 2; claim * <br> -- | 1 | |
| A | EP - A1 - 0 098 784 (MAJORETTE SOCIETE ANONYME DITE) <br> * Fig. 10; abstract * <br> -- | 1 | |
| A | DE - A1 - 2 812 972 (MEDMAR AB) <br> * Fig. 1,2,4,5; claim 1 * <br> -- | 1-7 | |
| A | GB - A - 2 023 700 (EMIL DOLL KG FAHRZEUG- UND KAROSSERIEBAU) <br> * Abstract * <br> -- | 1-3 | TECHNICAL FIELDS SEARCHED (Int. Cl.4) <br><br> F 16 B |
| A | DE - B2 - 1 964 084 (ROBERT BOSCH GMBH) <br> * Claim 1; fig. 1 * <br> ---- | 1 | |

The present search report has been drawn up for all claims

| Place of search | Date of completion of the search | Examiner |
|---|---|---|
| VIENNA | 17-03-1986 | HEIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82